(19) Europäisches Patentamt
European Patent Office
Office européen des brevets

(11) EP 0 925 822 B1

(12) **FASCICULE DE BREVET EUROPEEN**

(45) Date de publication et mention de la délivrance du brevet:
**14.04.2004 Bulletin 2004/16**

(51) Int Cl.⁷: **B01D 53/86**, B01D 53/94

(21) Numéro de dépôt: **98403172.4**

(22) Date de dépôt: **16.12.1998**

(54) **Procédé de réduction de NO et NO2 dans un milieu oxydant**

Verfahren zur Reduktion von NO und NO2 in einer oxidierenden Umgebung

Process for the reduction of NO and NO2 in an oxidising atmosphere

(84) Etats contractants désignés:
**BE DE ES GB IT NL SE**

(30) Priorité: **26.12.1997 FR 9716650**

(43) Date de publication de la demande:
**30.06.1999 Bulletin 1999/26**

(73) Titulaire: **Institut Français du Pétrole**
**92500 Rueil Malmaison (FR)**

(72) Inventeurs:
- **Bourges, Patrick**
  **92500 Rueil-Malmaison (FR)**
- **Mabilon, Gil**
  **78420 Carrières sur Seine (FR)**
- **Bouchez, Matthias**
  **92190 Meudon (FR)**
- **Lacombe, Sylvie**
  **92500 Rueil Malmaison (FR)**

(56) Documents cités:
**EP-A- 0 042 226**
**EP-A- 0 378 916**
**EP-A- 0 445 816**
**EP-A- 0 463 768**
**EP-A- 0 525 701**
**EP-A- 0 541 008**
**DE-A- 3 631 950**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 925 822 B1

## Description

La présente invention concerne un procédé d'élimination des oxydes d'azote NO et $NO_2$ dans un milieu surstoechiométrique en oxydants, en présence d'un catalyseur caractérisé par une forte activité à basse température et par une bonne sélectivité de la conversion des oxydes d'azote en azote moléculaire au détriment de la formation non désirée de protoxyde d'azote ($N_2O$) selon la revendication 1.

Les catalyseurs utilisés dans le procédé selon la présente invention permettent entre autres, d'éliminer les oxydes d'azote présents dans les gaz d'échappement de moteurs automobiles ou stationnaires fonctionnant en mélanges pauvres, qu'il s'agisse des moteurs à allumage par compression ou des moteurs à allumage commandé à réglage pauvre. Ces catalyseurs peuvent aussi être utilisés pour éliminer les oxydes d'azote des fumées de centrales thermiques, des incinérateurs de déchets ou des turbines à gaz. Ces gaz d'échappement ou fumées se caractérisent par des teneurs en oxydes d'azote de quelques dizaines à quelques milliers de parties par million (ppm), par des teneurs comparables en composés réducteurs (CO, $H_2$, hydrocarbures) mais surtout par des concentrations importantes en oxygène (de 0,5 à près de 20 % volume).

La forte toxicité des oxydes d'azote, leur rôle dans la formation des pluies acides et de l'ozone troposphérique ont conduit à la mise en place de normes sévères limitant les rejets de ces composés. Pour satisfaire ces normes, il est généralement nécessaire d'éliminer au moins une partie de ces oxydes présents dans les gaz d'échappement des moteurs automobiles ou stationnaires, des turbines ou des centrales thermiques et des incinérateurs.

L'élimination des oxydes d'azote par décomposition thermique ou de préférence catalytique est envisageable, mais les hautes températures exigées par cette réaction sont incompatibles avec celles des gaz d'échappement. Il semble que leur réduction soit réalisable essentiellement au moyen des réducteurs présents, mais en faibles quantités, dans le gaz d'échappement (CO, $H_2$, hydrocarbures imbrûlés), mais également au moyen de composés réducteurs complémentaires qu'il serait nécessaire d'injecter en amont du catalyseur. Ces agents de réduction sont des hydrocarbures, des alcools, des éthers ou autres composés oxygénés.

La réduction du mono et du dioxyde d'azote (NO et $NO_2$) peut conduire selon les équations mentionnées ci-dessous, à la formation soit d'azote moléculaire ($N_2$), soit de protoxyde d'azote ($N_2O$).

$$\begin{matrix} 2\,NO & & (O_2) \\ & + \text{Réducteur} & \text{----->}\ N_2 + (CO_2, H_2O) \\ 2\,NO_2 & & \end{matrix}$$

$$\begin{matrix} 2\,NO & & (O_2) \\ & + \text{Réducteur} & \text{----->}\ N_2O + (CO_2, H_2O) \\ 2\,NO_2 & & \end{matrix}$$

L'azote moléculaire ($N_2$) est le produit inoffensif désiré alors que la formation du protoxyde d'azote ($N_2O$), gaz à effet de serre, doit être évitée au maximum.

Les paramètres essentiels pour caractériser les performances du catalyseur en élimination des oxydes d'azote sont :

- la température pour laquelle la conversion est maximale
- la conversion ou taux d'élimination des $NO_x$
- les sélectivités en $N_2$ et $N_2O$
- et surtout le rendement $N_2$ de la réaction de réduction des $NO_x$ qui peut s'exprimer par la relation :

$$\text{Rendement } N_2 = 100 \times \frac{NO_x \text{ disparu} - 2 \times (N_2O \text{ formé})}{NO_x \text{ initial}}$$

La majorité des travaux sur la mise au point de catalyseurs actifs dans l'élimination des oxydes d'azote en milieu oxydant porte sur la mise en oeuvre de métaux de transition (généralement le cuivre) échangés sur des zéolithes de rapports atomiques Si/Al généralement compris entre 3 et 100 et dont les structures peuvent être de types différents (mordénite, faujasite, ZSM-5) (US-A-5 149 512). Ces catalyseurs sont actifs en conversion des oxydes d'azote pour des températures comprises entre 350 et 550 °C. Ces conditions limitent donc leur utilisation à la dépollution des gaz d'échappement des moteurs à essence à réglage pauvre et des moteurs Diesel poids lourds lorsque ceux-ci fonctionnent à pleine charge et à haut régime. En effet, pour les véhicules légers Diesel, la température des gaz d'échappement est généralement comprise entre 150 et 300 °C et dépasse rarement les 500 °C, ce qui a pour conséquence une efficacité restreinte de ces catalyseurs en élimination des oxydes d'azote en condition normale d'utilisation du véhicule.

On sait par ailleurs que la stabilité thermique des catalyseurs au cuivre échangés sur zéolithe peut être améliorée par l'ajout d'éléments alcalino-terreux et de terres rares (le lanthane , P. Budi et al. Catalysis Letters 41 (1996) 47-53, et le cérium, Y. Zhang et al. Journal of Catalysis 194 (1996) 131-154).

L'utilisation de métaux nobles comme phase active permet également d'éliminer une majeure partie des oxydes d'azote dans des proportions comparables à celles mesurées avec les catalyseurs au cuivre (EP-A-0 709 129). Ces phases catalytiques présentent l'avantage d'être actives à des températures nettement plus basses (200 - 300 °C), ce qui est un avantage primordial pour la dépollution des gaz d'échappement des voitures Diesel dont les températures en sortie de moteur sont généralement comprises entre 150 et 300 °C.

Les métaux nobles peuvent être imprégnés sur différents supports tels que l'alumine, la silice, la zircone, l'oxyde de titane ou des zéolithes. Les catalyseurs au platine supportés sur zéolithe (ZSM-5) peuvent être préparés par échange ionique (EP-A-0 709 129).

L'ajout de métaux alcalino-terreux ou de terres rares au catalyseur renfermant des métaux nobles (généralement le platine) a pour objectif d'améliorer la stabilité thermique du catalyseur et d'accroître sa durée de vie. Il a été proposé un catalyseur pour lequel du platine et du lanthane sont déposés sur un support poreux afin d'éliminer les polluants, dont les $NO_x$, dans un gaz d'échappement renfermant un excès d'oxygène (JP-A-05/168 862).

Les catalyseurs sont en général très actifs à basse température en conversion des oxydes d'azote NO et $NO_2$. Cependant, la majorité de ces catalyseurs présentent le handicap de ne réaliser que partiellement la réduction des $NO_x$ à savoir que le produit majoritairement formé n'est pas l'azote moléculaire ($N_2$) mais le protoxyde d'azote ($N_2O$).

Le document EP-A-0541008 décrit l'usage d'une zéolithe EU-1 pour la réduction de $N_2O$.

L'objet de la présente invention concerne un procédé, pour l'élimination des oxydes d'azote, aussi bien à basse température (150 - 300 °C) qu'à température plus élevée (300 - 600 °C) dans un mélange gazeux fortement oxydant, en présence d'un catalyseur présentant un rendement en azote moléculaire nettement amélioré par rapport aux catalyseurs de l'art antérieur. Cette amélioration est obtenue par une baisse de la sélectivité de la réduction des oxydes d'azote en protoxyde d'azote ($N_2O$) et par conséquent par un accroissement de la sélectivité de la réduction des oxydes d'azote en $N_2$.

Le procédé de l'invention permet de réaliser la réduction des oxydes d'azote en utilisant comme agent réducteur le monoxyde de carbone, l'hydrogène, les hydrocarbures, les alcools, les éthers et autres composés organiques oxygénés et également le carburant du véhicule. De tels carburants peuvent être des essences, additivées ou non de composés oxygénés (par exemple les alcools ou les éthers), des gazoles, des gaz de pétrole liquéfiés (GPL) ou des gaz naturels comprimés (GNC).

La demanderesse a trouvé qu'un catalyseur contenant au moins une zéolithe choisie parmi les zéolithes NU-86, NU-87 et EU-1, améliore de manière surprenante le rendement en azote dans la réaction de réduction des oxydes d'azote NO et $NO_2$ dans des gaz d'échappement surstoechiométriques en oxygène. Ces zéolithes sont décrites dans les brevets EP-A-0 463 768 (zéolithe NU-86), EP-A-0 378 916 (zéolithe NU-87) et EP-A-0 042 226 (zéolithe EU-1). A ce support, on ajoute éventuellement au moins un métal de transition, de préférence le cuivre, et/ ou au moins un métal noble, de préférence le platine. Au moins un élément appartenant aux groupes des alcalino-terreux et des terres rares peut éventuellement être ajouté à ce support. Ce catalyseur permet d'éliminer les oxydes d'azote présents dans un gaz surstoechiométrique en oxydants, en particulier en oxygène, par réduction au moyen d'agents réducteurs présents dans le milieu, et/ou injectés en amont du catalyseur. La réaction est réalisée à une température comprise entre 150°C et 600°C, de préférence à basse température si un métal noble de la famille du platine est ajouté à la zéolithe ou de préférence à plus haute température si un métal de transition est ajouté à la zéolithe, avec un rendement élevé en azote moléculaire et une sélectivité faible en protoxyde d'azote, produit non désiré.

Le catalyseur se présente sous forme de billes, de pastilles ou d'extrudés. La phase active du catalyseur peut être également déposée ou directement préparée sur des supports monolithiques en céramique ou en métal.

Ainsi, le procédé selon l'invention est effectué en présence d'un catalyseur qui comprend :

- au moins un oxyde inorganique réfractaire constitué au moins en partie d'au moins une zéolithe choisie dans le groupe formé par les zéolithes NU-86, NU-87 et EU-1 ;

- éventuellement au moins un élément (A) appartenant aux groupes VIB, VIIB, VIII et IB des métaux de transition ;
- éventuellement au moins un élément (B) du groupe VIII des métaux nobles comprenant ie platine, le rhodium, le ruthénium, l'iridium et le palladium ;
- et éventuellement au moins un élément (C) appartenant au groupe IIA des alcalino-terreux et/ou au groupe IIIB des terres rares.

De manière préférée, la composition massique de la phase active, exprimée en pourcent masse par rapport à la masse totale de ladite phase active calcinée à 550 °C pendant 4 h, est la suivante :

- de 55 % à 100 % d'au moins un oxyde inorganique réfractaire constitué au moins en partie d'au moins une zéolithe choisie dans le groupe formé par les zéolithes NU-86, NU-87 et EU-1,
- de 0 à 20 % d'au moins un élément (A) appartenant aux groupes VIB, VIIB, VIII et IB des métaux de transition, exprimé sous forme d'oxyde,
- de 0 à 5 % d'au moins un élément (B) appartenant au groupe VIII des métaux nobles, comprenant le platine, le rhodium, le ruthénium, l'iridium, le palladium, et
- de 0 à 20 % d'au moins un élément (C) appartenant au groupe IIA des alcalino-terreux et/ou au groupe IIIB des terres rares, exprimé sous forme d'oxyde.

Dans un premier mode de réalisation, le catalyseur utilisé selon l'invention contient au moins un oxyde inorganique réfractaire constitué au moins en partie d'au moins une zéolithe choisie dans le groupe formé par les zéolithes NU-86, NU-87, EU-1 et au moins un élément (A) et éventuellement au moins un élément (C), la composition massique du catalyseur, exprimée en pourcent masse par rapport à sa masse anhydre, calcinée à 550 °C pendant 4 heures, étant la suivante :

- de 80 à 99 % d'au moins un oxyde inorganique réfractaire constitué au moins en partie d'au moins une zéolithe choisie dans le groupe formé par les zéolithes NU-86, NU-87 et EU-1,
- de 1 à 10 % d'au moins un élément (A) appartenant aux groupes VIB, VIIB, VIII et IB des métaux de transition, exprimé sous forme d'oxyde, et
- de 0 à 10 % d'au moins un élément (C) appartenant au groupe IIA des alcalino-terreux et/ou au groupe IIIB des terres rares, exprimé sous forme d'oxyde.

Lorsque le catalyseur au moins un élément (C), le catalyseur contient en poids 0,1 à 10% d'élément (C) par rapport à la masse totale de catalyseur.

Dans un second mode de réalisation, le catalyseur selon l'invention contient au moins un oxyde inorganique réfractaire constitué au moins en partie d'au moins une zéolithe choisie dans le groupe formé par les zéolithes NU-86, NU-87, EU-1 et au moins un élément (B) et éventuellement au moins un élément (C), la composition massique du catalyseur, exprimée en pourcent masse par rapport à sa masse anhydre, calcinée à 550°C pendant 4 heures étant la suivante:

- de 87 à 99,9 % d'au moins un oxyde inorganique réfractaire constitué au moins en partie d'au moins une zéolithe choisie dans le groupe formé par les zéolithes NU-86, NU-87 et EU-1,
- de 0,1 à 3 % d'au moins un élément (B) appartenant au groupe VIII des métaux précieux, comprenant le platine, le rhodium, le rhthénium, l'iridium, la palladium, et
- de 0 à 10 % d'au moins un élément (C) appartenant au groupe IIA des alcalino-terreux et/ou au groupe IIIB des terres rares, exprimé sous forme d'oxyde.

Lorsque le catalyseur au moins un élément (C), le catalyseur contient en poids 0,1 à 10% d'élément (C) par rapport à la masse totale de catalyseur.

L'oxyde inorganique réfractaire est généralement au moins un composé choisi dans le groupe formé par les composés ci-après : la zéolithe NU-86, la zéolithe NU-87, la zéolithe EU-1 et peut contenir en outre au moins un composé choisi parmi, l'alumine, la silice, la silice-alumine, l'oxyde de titane, l'oxyde de zirconium, un oxyde mixte ou une solution solide d'au moins deux des oxydes précités, ou le mélange d'au moins deux de ces composés. Cependant, la demanderesse privilégie comme oxydes inorganiques réfractaires les zéolithes choisies dans le groupe formé par les zéolithes NU-86, NU-87 et EU-1 ou le mélange d'au moins deux de ces zéolithes. La masse de zéolithe NU-86 et/ou NU-87 et/ou EU-1 par rapport à la masse de l'ensemble des oxydes inorganiques réfractaires est généralement comprise entre 50 et 100 % et de préférence entre 80 et 100 %.

Les éléments (A) appartenant aux groupes VIB, VIIB, VIII et IB du tableau périodique préférés sont le cuivre, le nickel, le cobalt, le fer, le manganèse, le chrome, le molybdène ou le mélange d'au moins deux de ces éléments.

De préférence, l'élément (A) est le cuivre.

Parmi les métaux nobles (B) précités, de préférence, le métal choisi est le platine.

Pour améliorer la stabilité thermique du catalyseur, on peut éventuellement ajouter au moins un élément (C) appartenant au groupe IIA des alcalino-terreux et/ou au groupe IIIB des terres rares. De manière préférée, on choisit le calcium, le baryum, ie strontium, le lanthane, le cérium ou le mélange d'au moins deux de ces éléments. De manière encore plus préférée l'élement (C) est le lanthane.

Les catalyseurs utilisés selon l'invention, actifs en réduction sélective des oxydes d'azote en azote moléculaire, peuvent se présenter sous forme de billes, de pastilles ou d'extrudés.

Les étapes de la préparation du catalyseur à partir du support sont les suivantes :

a) - éventuellement une ou plusieurs étapes d'imprégnation d'un support constitué d'au moins une des zéolithes du groupe formé par NU-86, NU-87 et EU-1 par au moins un précurseur d'au moins un élément de transition (A) et/ou par au moins un précurseur d'au moins un métal noble (B) ;

b) - éventuellement l'ajout d'un élément (C) appartenant au groupe IIA des alcalino-terreux, au groupe IIIB des terres rares, par imprégnation par au moins un précurseur d'au moins un élément appartenant aux groupes IIA et IIIB du tableau périodique, avant ou après la ou les étapes d'imprégnation ; et

c) - éventuellement une étape de traitement thermique en milieu oxydant, neutre ou réducteur après chaque étape d'imprégnation, à une température comprise entre 200 et 700 °C.

Lorsque le catalyseur en comprend, les éléments (A), (B) et (C) sont ajoutés à l'oxyde inorganique réfractaire par imprégnation de solutions aqueuses ou organiques de précurseurs de métal ou d'oxydes de ces éléments, selon les techniques connues de l'homme de l'art, dites à sec ou avec excès.

Ainsi, lorsque le catalyseur comprend au moin un oxyde inorganique réfractaire constitué au moins en partie d'au moins une zéolithe choisie dans le groupe formé par les zéolithes NU-86, NU-87 et EU-1 et au moins un élément A et/ou au moins un élément B, les étapes de la préparation sont les suivantes :

a) - une ou plusieurs étapes d'imprégnation d'un support constitué au moins en partie d'au moins une des zéolithes du groupe formé par NU-86, NU-87 et EU-1 par au moins un précurseur d'au moins un élément de transition (A) et/ou par au moins un précurseur d'au moins un métal noble (B) ;

b) - éventuellement l'ajout d'un élément (C) appartenant au groupe IIA des alcalino-terreux, au groupe IIIB des terres rares, par imprégnation par au moins un précurseur d'au moins un élément appartenant aux groupes IIA et IIIB du tableau périodique, avant ou après la ou les étapes d'imprégnation ; et

c) - éventuellement une étape de traitement thermique en milieu oxydant, neutre ou réducteur après chaque étape d'imprégnation, à une température comprise entre 200 et 700 °C.

Les précurseurs des métaux de transition (A) sont en général choisis parmi les nitrates, les acétates et les formiates, en solutions aqueuses, et les acétylacétonates, qui peuvent être mis en oeuvre en milieu organique.

Les précurseurs des métaux nobles (B) sont ceux classiquement utilisés pour la préparation de catalyseurs, en particulier et quand ils existent, les chlorures, les homologues acides des chlorures, les complexes chlorés, les nitrates, les complexes aminés, les acétylacétonates. A titre d'exemples non limitatifs, on peut citer l'acide hexachloroplatinique, le chlorure de platine tétrammine, le dinitroso-diammino platine, l'acide hexachloro-iridique, le trichlorure de ruthénium, le dichlorure de ruthénium pentammine.

Les précurseurs de l'élément (C) appartenant au groupe IIA des alcalino-terreux peuvent être introduits sous forme de pigments, tels que les oxydes, les carbonates ou les sulfates. Mais d'une façon privilégiée, on imprègne des précurseurs de ces éléments sur l'oxyde réfractaire. Dans ce cas, les sels solubles dans l'eau utilisés sont, de préférence, les nitrates, les acétates et les formiates. Les précurseurs de l'élément (C) appartenant au groupe IIIB des terres rares pouvant être introduits sous forme de pigments sont alors des carbonates, des oxalates ou des sulfates ; mais d'une façon privilégiée on réalisera une imprégnation d'une solution aqueuse d'au moins un de leurs précurseurs, tels que les nitrates.

Le conditionnement du catalyseur sous forme de billes, extrudés ou pastilles, peut être réalisé à n'importe quel stade de la préparation. De manière préférée l'étape de mise en forme est réalisée directement sur l'oxyde inorganique réfractaire avant toute modification, ou encore après toutes les étapes d'imprégnation et de calcination.

Pour l'utilisation sur véhicule, il est souvent préférable de mettre en oeuvre des supports rigides (monolithes) présentant une porosité ouverte importante (supérieure à 70 %) afin de limiter les pertes de charge que pourraient engendrer les forts débits de gaz, mais surtout les grandes vitesses spatiales des gaz d'échappement. En effet, ces pertes de charge contribuent à abaisser le rendement des moteurs à combustion interne (essence ou Diesel). Par ailleurs, la ligne d'échappement étant soumise à des vibrations ainsi qu'à des chocs mécaniques et thermiques importants, les catalyseurs en billes, en pastilles ou en extrudés risquent de subir des détériorations soit par attrition soit

par fracturation.

Ces monolithes peuvent être :

- soit en céramique dont les éléments principaux peuvent être l'alumine, la zircone, la cordiérite, la mullite, la silice, les alumino-silicates ou la combinaison de plusieurs de ces composés,
- soit en carbure et/ou nitrure de silicium,
- soit en titanate d'aluminium,
- soit en métal.

Les supports métalliques peuvent être réalisés par l'enroulement de feuillards ondulés ou par l'empilement de feuilles métalliques également ondulées, constituant une structure en nid d'abeille à canaux droits ou à canaux en zig zag communiquant entre eux ou non. Ils peuvent être également réalisés à partir de fibres ou de fils métalliques enchevêtrés, tissés ou tressés.

Pour les supports en métal renfermant de l'aluminium dans leur composition, il est recommandé de les prétraiter à haute température (par exemple entre 700 et 1100 °C) pour développer en surface une micro-couche d'alumine réfractaire. Cette micro-couche superficielle, de porosité et de surface spécifique supérieure à celle du métal d'origine favorise l'accrochage de la phase active tout en protégeant le reste du support contre la corrosion.

Le catalyseur est préparé par enduction de ces supports monolithiques par une suspension renfermant tout ou partie des éléments constituant la phase catalytique. Les éléments non introduits dans les étapes précédentes, sont imprégnés en une ou plusieurs étapes sur le monolithe enduit, sous forme d'une solution de leurs sels précurseurs.

Les différentes étapes d'une méthode de préparation du catalyseur sur support monolithique consiste à enduire le support avec l'oxyde inorganique réfractaire, puis à éventuellement imprégner successivement les précurseurs des différents éléments constituant la phase catalytique. Chacune de ces imprégnations est éventuellement suivie d'un traitement thermique spécifique qui a pour but de stabiliser et de conditionner la phase préalablement constituée, dans un état où l'interaction avec la phase suivante est la plus appropriée.

L'oxyde inorganique réfractaire est enduit sur le support monolithique en céramique ou en métal selon une technique connue de l'homme de l'art. La technique d'enduction consiste à préparer une suspension aqueuse de cet oxyde inorganique réfractaire avec un composé minéral ou organique qui permet de fixer ledit oxyde sur le support. En général ce composé, appelé liant, est un gel d'alumine (boehmite) ou un sol de silice, que l'on ajoute dans la suspension renfermant un acide organique ou minéral (agent peptisant). L'opération de dépôt de cet oxyde est réalisée par immersion du monolithe dans la suspension, par circulation de la suspension dans le monolithe ou par pulvérisation de cette suspension sur le monolithe. Après élimination de l'excédent de suspension, le film d'oxyde est fixé sur le support par séchage puis calcination de l'ensemble à une température généralement comprise entre 300 et 900 °C, de préférence entre 400 et 600 °C.

La quantité de phase catalytique (ou phase active) déposée sur le support monolithique (ou substrat) est généralement comprise entre 20 et 300 g par litre dudit support et avantageusement entre 50 et 200 g.

## EXEMPLES

Les exemples 1 à 3, 5 à 7, 9 à 11, 13 à 15 et 17 à 19 ci-après illustrent l'invention sans en limiter la portée. Dans ces exemples il est décrit uniquement la préparation directe des catalyseurs sur support monolithique. Cependant ces phases peuvent être également préparées sur des supports billes, extrudés ou pastilles, préformés avant la préparation, ou encore mises en forme par dragéification, extrusion ou pastillage.

Les exemples 4, 8, 12, 16 et 20 décrivent la préparation de catalyseurs selon l'art antérieur. A titre de comparaison, tous ces catalyseurs sont testés (exemple 21) au laboratoire en micro-unité avec un mélange de gaz synthétique.

Dans tous les exemples, la désignation de phase active (ou phase catalytique) déposée sur le support (ou substrat) correspond à la somme des éléments constituant le catalyseur décrit dans la procédure ci-dessous, à savoir au moins un oxyde inorganique réfractaire, éventuellement les oxydes de métaux de transition (A), éventuellement les métaux précieux (B) et éventuellement les oxydes des éléments alcalino-terreux ou les terres rares (C). La masse de substrat monolithique en céramique ou en métal n'est pas prise en compte dans l'expression des teneurs massiques de chacun des constituants de cette phase catalytique.

Selon les habitudes de l'homme de l'art, les quantités de métal précieux présentes dans le catalyseur seront généralement exprimées en gramme par litre de support. Les teneurs massiques des différents éléments constituant la phase catalytique (ou phase active) sont mentionnées dans le tableau n I.

**Exemple 1 (invention) :** Préparation d'un catalyseur contenant de la zéolithe NU-86.

On disperse 250 g de gel de silice sous forme de poudre dans 2500 $cm^3$ d'eau distillée. On introduit ensuite 850 g de zéolithe NU-86.

Cette suspension est broyée de telle manière que la granulométrie moyenne des particules solides soit inférieure à 10 microns.

Un monolithe céramique de 0,904 litre, vendu par la société Corning, et présentant une structure en nid d'abeille avec une densité de 62 cellules par $cm^2$ est enduit par cette suspension. Pour réaliser cette opération, le support est immergé dans le milieu pendant quelques secondes, secoué et soufflé pour éliminer l'excédent de produit qui obstrue les canaux. Le support, recouvert par le film de matière, est séché puis calciné à 550 °C afin de fixer l'enduit (ou "wash coat") au support.

Le traitement thermique final est réalisé sous air à 550 °C pendant 4 h.

**Exemple 2 (invention) :** Préparation d'un catalyseur contenant de la zéolithe NU-87.

On reproduit la préparation du catalyseur de l'exemple 1 à l'exception que la zéolithe NU-86 est remplacée par la zéolithe NU-87.

**Exemple 3 (invention) :** Préparation d'un catalyseur contenant de la zéolithe EU-1.

On reproduit la préparation du catalyseur de l'exemple 1 à l'exception que la zéolithe NU-86 est remplacée par la zéolithe EU-1.

**Exemple 4 (comparatif) :** Préparation d'un catalyseur contenant de la zéolithe ZSM-5.

On reproduit la préparation du catalyseur de l'exemple 1 à l'exception que la zéolithe NU-86 est remplacée par la zéolithe ZSM-5.

**Exemple 5 (invention) :** Préparation d'un catalyseur par échange Cu / zéolithe NU-86.

On prépare un monolithe enduit avec la zéolithe NU-86 selon l'exemple 1.

Le monolithe enduit avec la zéolithe NU-86 est ensuite imprégné par échange avec une solution d'acétate de cuivre. L'imprégnation par échange de la zéolithe enduite sur monolithe est réalisée par circulation dans le monolithe en boucle fermée de 5 l de solution d'acétate de cuivre (0,01 M) pendant 24 heures à température ambiante. Ensuite, le catalyseur résultant échangé au cuivre est lavé par circulation de 5 l d'eau distillée dans le monolithe, puis séché à 110 °C pendant 8 h.

Le traitement thermique final est réalisé sous air à 550 °C pendant 4 h.

La quantité de cuivre déposée par échange est de 3 % en masse.

**Exemple 6 (invention) :** Préparation d'un catalyseur par échange Cu / zéolithe NU-87.

On reproduit la préparation du catalyseur de l'exemple 5 à l'exception que la zéolithe NU-86 est remplacée par la zéolithe NU-87.

**Exemple 7 (invention) :** Préparation d'un catalyseur par échange Cu / zéolithe EU-1.

On reproduit la préparation du catalyseur de l'exemple 5 à l'exception que la zéolithe NU-86 est remplacée par la zéolithe EU-1.

**Exemple 8 (comparatif) :** Préparation d'un catalyseur par échange Cu / zéolithe ZSM-5.

On reproduit la préparation du catalyseur de l'exemple 5 à l'exception que la zéolithe NU-86 est remplacée par la zéolithe ZSM-5.

**Exemple 9 (invention) :** Préparation d'un catalyseur par échange Pt / zéolithe NU-86.

On prépare un monolithe enduit avec la zéolithe NU-86 selon l'exemple 1.

Le monolithe enduit avec la zéolithe Nu-86 est ensuite imprégné par échange avec une solution ammoniacale

à pH 10 de dichlorure de platine (II) tétrammine ($Pt(NH_3)_4Cl_2.H_2O$). L'imprégnation par échange de la zéolithe enduite sur monolithe est réalisée selon cette procédure : 2,5 g de dichlorure de platine (II) tétrammine ($Pt(NH_3)_4Cl_2.H_2O$) sont introduits dans 5 de solution ammoniacale à pH 10. La solution obtenue circule dans le monolithe en boucle fermée, pendant 24 heures à température ambiante. Ensuite, le catalyseur résultant échangé au platine est lavé par circulation de 5 l d'eau distillée dans le monolithe, puis séché à 110 °C pendant 8 h.

Le traitement thermique final est réalisé sous air à 550 °C pendant 4 h.

La quantité de platine déposée par échange est de 1 % en masse.

**Exemple 10 (invention) :** Préparation d'un catalyseur par échange Pt / zéolithe NU-87.

On reproduit la préparation du catalyseur de l'exemple 9 à l'exception que la zéolithe NU-86 est remplacée par la zéolithe NU-87.

**Exemple 11 (invention) :** Préparation d'un catalyseur par échange Pt / zéolithe EU-1.

On reproduit la préparation du catalyseur de l'exemple 10 à l'exception que la zéolithe NU-86 est remplacée par la zéolithe EU-1.

**Exemple 12 (comparatif) :** Préparation d'un catalyseur par échange Pt / zéolithe ZSM-5.

On reproduit la préparation du catalyseur de l'exemple 10 à l'exception que la zéolithe Nu-86 est remplacée par la zéolithe ZSM-5.

**Exemple 13 (invention) :** Préparation d'un catalyseur par échange Cu - La / zéolithe N U-86.

On prépare un monolithe enduit avec la zéolithe NU-86 selon l'exemple 1.

Le monolithe enduit avec la zéolithe Nu-86 est ensuite imprégné par échange avec une solution de nitrate de lanthane. L'imprégnation par échange de la zéolithe enduite sur monolithe est réalisée selon cette procédure : 5 l de solution de nitrate de lanthane (0,01 M) circulent dans le monolithe en boucle fermée, pendant 24 heures à température ambiante. Ensuite, le catalyseur résultant échangé au lanthane est lavé par circulation de 5 l d'eau distillée dans le monolithe, puis séché à 110 °C pendant 8 heures. Le catalyseur est ensuite calciné à 550 °C pendant 4 h.

La quantité de lanthane déposée par échange est de 6 % en masse.

Le monolithe enduit avec la zéolithe NU-86 puis échangé au lanthane est ensuite imprégné par échange avec une solution d'acétate de cuivre. L'imprégnation par échange de la zéolithe enduite sur monolithe est réalisée selon cette procédure : 5 l de solution d'acétate de cuivre (0,01 M) circulent dans le monolithe en boucle fermée, pendant 24 heures à température ambiante. Ensuite, le catalyseur résultant échangé au cuivre est lavé par circulation de 5 l d'eau distillée dans le monolithe, puis séché à 110°C pendant 8 h.

Le traitement thermique final est réalisé sous air à 550 °C pendant 4 h.

La quantité de cuivre déposée par échange est de 3 % en masse.

**Exemple 14 (invention) :** Préparation d'un catalyseur par échange Cu - La/ zéolithe NU-87.

On reproduit la préparation du catalyseur de l'exemple 13 à l'exception que la zéolithe NU-86 est remplacée par la zéolithe Nu-87.

**Exemple 15 (invention) :** Préparation d'un catalyseur par échange Cu - La / zéolithe EU-1.

On reproduit la préparation du catalyseur de l'exemple 13 à l'exception que la zéolithe Nu-86 est remplacée par la zéolithe EU-1.

**Exemple 16 (comparatif) :** Préparation d'un catalyseur par échange Cu - La /zéolithe ZSM-5.

On reproduit la préparation du catalyseur de l'exemple 13 à l'exception que la zéolithe Nu-86 est remplacée par la zéolithe ZSM-5.

**Exemple 17 (invention) :** Préparation d'un catalyseur par échange Pt - La / zéolithe NU-86.

On prépare un monolithe enduit avec la zéolithe NU-86 selon l'exemple 1.

Le monolithe enduit avec la zéolithe Nu-86 est ensuite imprégné par échange avec une solution de nitrate de lanthane. L'imprégnation par échange de la zéolithe enduite sur monolithe est réalisée selon cette procédure : 5 l de solution de nitrate de lanthane (0,01 M) circulent dans le monolithe en boucle fermée, pendant 24 heures à température ambiante. Ensuite, le catalyseur résultant échangé au lanthane est lavé par circulation de 5 l d'eau distillée dans le monolithe, puis séché à 110 °C pendant 8 heures. Le catalyseur est ensuite calciné à 550 °C pendant 4 h.

La quantité de lanthane déposée par échange est de 6 % en masse.

Le monolithe enduit avec la zéolithe NU-86 puis échangé au lanthane est ensuite imprégné par échange avec une solution ammoniacale à pH 10 de dichlorure de platine (II) tétrammine ($Pt(NH_3)_4Cl_2.H_2O$) . L'imprégnation par échange de la zéolithe enduite sur monolithe est réalisée selon cette procédure : 2,5 g de dichlorure de platine (II) tétrammine ($Pt(NH_3)_4Cl_2.H_2O$) sont introduits dans 5 l de solution ammoniacale à pH 10. La solution obtenue circule dans le monolithe en boucle fermée, pendant 24 heures à température ambiante. Ensuite, le catalyseur résultant échangé au platine est lavé par circulation de 5 l d'eau distillée dans le monolithe, puis séché à 110 °C pendant 8 h.

Le traitement thermique final est réalisé sous air à 550 °C pendant 4 h.

**Exemple 18 (invention) :** Préparation d'un catalyseur par échange Pt - La/ zéolithe N U-87.

On reproduit la préparation du catalyseur de l'exemple 17 à l'exception que la zéolithe NU-86 est remplacée par la zéolithe Nu-87.

**Exemple 19 (invention) :** Préparation d'un catalyseur par échange Pt - La / zéolithe EU-1.

On reproduit la préparation du catalyseur de l'exemple 17 à l'exception que la zéolithe Nu-86 est remplacée par la zéolithe EU-1.

**Exemple 20 (comparatif) :** Préparation d'un catalyseur par échange Pt - La / zéolithe ZSM-5.

On reproduit la préparation du catalyseur de l'exemple 17 à l'exception que la zéolithe Nu-86 est remplacée par la zéolithe ZSM-5.

Pour chacun des catalyseurs décrits ci-dessus, la masse et la composition massique de la phase active déposée sur le support céramique (oxydes inorganiques réfractaires, éléments appartenant au groupe des métaux de transition (A), éléments appartenant au groupe des métaux précieux (B), éléments appartenant au groupe des alcalino-terreux ou/et au groupe des terres rares (C)) sont rassemblées dans le tableau I.

Tableau I

| **Composition massique de la phase active du catalyseur** (teneur par litre de substrat en g et pourcentage massique dans la phase catalytique) | | | | | | | |
|---|---|---|---|---|---|---|---|
| Catalyseur de l'exemple | composition | masse de la phase active du catalyseur | oxyde inorganique | zéolithe | oxyde de métal de transition | métal précieux | oxyde de terre rare |
| | | | | | Cu | Pt | La |
| 1 (inv.) | NU-86 | 120 g/l | 120 g/l<br>100 % | 102 g/l<br>85 % | | | |
| 2 (inv.) | NU-87 | 120 g/l | 120 g/l<br>100 % | 102 g/l<br>85 % | | | |
| 3 (inv.) | EU1 | 120 g/l | 120 g/l<br>100 % | 102 g/l<br>85 % | | | |
| 4 (comp.) | ZSM-5 | 120 g/l | 120 g/l<br>100 % | 102 g/l<br>85 % | | | |
| 5 (inv.) | Nu-86<br>Cu | 123,7 g/l | 120 g/l<br>97 % | 102 g/l<br>82,4 % | 3,7 g/l<br>3 % | | |
| 6 (inv.) | Nu-87<br>Cu | 123,7 g/l | 120 g/l<br>97 % | 102 g/l<br>82,4 % | 3,7 g/l<br>3 % | | |

Tableau I (suite)

| **Composition massique de la phase active du catalyseur** (teneur par litre de substrat en g et pourcentage massique dans la phase catalytique) | | | | | | | |
|---|---|---|---|---|---|---|---|
| Catalyseur de l'exemple | composition | masse de la phase active du catalyseur | oxyde inorganique | zéolithe | oxyde de métal de transition | métal précieux | oxyde de terre rare |
| | | | | | Cu | Pt | La |
| 7 (inv.) | EU-1 Cu | 123,7 g/l | 120 g/l 97 % | 102 g/l 82,4 % | 3,7 g/l 3 % | | |
| 8 (comp.) | ZSM-5 Cu | 123,7 g/l | 120 g/l 97 % | 102 g/l 82,4 % | 3.7 g/l 3 % | | |
| 9 (inv.) | Nu-86 Pt | 121,2 g/l | 120 g/l 99 % | 102 g/l 84,1 % | | 1,2 g/l 1 % | |
| 10 (inv.) | Nu-87 Pt | 121,2 g/l | 120 g/l 99 % | 102 g/l 84,1 % | | 1,2 g/l 1 % | |
| 11 (inv.) | EU-1 Pt | 121,2 g/l | 120 g/l 99 % | 102 g/l 84,1 % | | 1,2 g/l 1 % | |
| 12 (comp.) | ZSM-5 Pt | 121,2 g/l | 120 g/l 99 % | 102 g/l 84,1 % | | 1,2 g/l 1 % | |
| 13 (inv.) | Nu-86 La - Cu | 131,85 g/l | 120 g/l 91 % | 102 g/l 77,3 % | 3,95 g/l 3 % | | 7,9 g/l 6 % |
| 14 (inv.) | Nu-87 La - Cu | 131,85 g/l | 120 g/l 91 % | 102 g/l 77,3% | 3,95 g/l 3 % | | 7,9 g/l 6 % |
| 15 (inv.) | EU-1 La - Cu | 131,85 g/l | 120 g/l 91 % | 102 g/l 77,3 % | 3,95 g/l 3 % | | 7,9 g/l 6 % |
| 16 (comp.) | ZSM-5 La - Cu | 131,85 g/l | 120 g/l 91 % | 102 g/l 77,3 % | 3,95 g/l 3 % | | 7,9 g/l 6 % |
| 17 (inv.) | Nu-86 La - Pt | 129,1 g/l | 120 g/l 92,9 % | 102 g/l 79 % | | 1,2 g/l 1 % | 7,9 g/l 6 % |
| 18 (inv.) | Nu-87 La - Pt | 129,1 g/l | 120 g/l 92,9 % | 102 g/l 79 % | | 1,2 g/l 1 % | 7,9 g/l 6 % |
| 19 (inv.) | EU-1 La - Pt | 129,1 g/l | 120 g/l 92,9 % | 102 g/l 79 % | | 1,2 g/l 1 % | 7,9 g/l 6 % |
| 20 (comp.) | ZSM-5 La - Pt | 129,1 g/l | 120 g/l 92,9 % | 102 g/l 79 % | | 1,2 g/l 1 % | 7,9 g/l 6 % |

Tableau I

| **Composition massique de la phase active du catalyseur** (teneur par litre de substrat en g et pourcentage massique dans la phase catalytique) | | | | | | | |
|---|---|---|---|---|---|---|---|
| Catalyseur de l'exemple | composition | masse de la phase active du catalyseur | oxyde inorganique | zéolithe | oxyde de métal de transition | métal précieux | oxyde de terre rare |
| | | | | | Cu | Pt | La |
| 1 (inv.) | NU-86 | 120 g/l | 120 g/l 100 % | 102 g/l 85% | | | |

Tableau I (suite)

| Composition massique de la phase active du catalyseur<br>(teneur par litre de substrat en g et pourcentage massique dans la phase catalytique) | | | | | | | |
|---|---|---|---|---|---|---|---|
| Catalyseur de l'exemple | composition | masse de la phase active du catalyseur | oxyde inorganique | zéolithe | oxyde de métal de transition | métal précieux | oxyde de terre rare |
| | | | | | Cu | Pt | La |
| 2 (inv.) | NU-87 | 120 g/l | 120 g/l<br>1 00 % | 102 g/l<br>85 % | | | |
| 3 (inv.) | EU1 | 120 g/l | 120 g/l<br>1 00 % | 102 g/l<br>85 % | | | |
| 4 (comp.) | ZSM-5 | 120 g/l | 120 g/l<br>1 00 % | 102 g/l<br>85 % | | | |
| 5 (inv.) | Nu-86<br>Cu | 123,7 g/l | 120 g/l<br>97 % | 102 g/l<br>82,4 % | 3,7 g/l<br>3 % | | |
| 6 (inv.) | Nu-87<br>Cu | 123,7 g/l | 120 g/l<br>97 % | 102 g/l<br>82,4 % | 3,7 g/l<br>3 % | | |
| 7 (inv.) | EU-1<br>Cu | 123,7 g/l | 120 g/l<br>97 % | 102 g/l<br>82,4 % | 3,7 g/l<br>3 % | | |
| 8 (comp.) | ZSM-5<br>Cu | 123,7 g/l | 120 g/l<br>97 % | 102 g/l<br>82,4 % | 3.7 g/l<br>3 % | | |
| 9 (inv.) | Nu-86<br>Pt | 121,2 g/l | 120 g/l<br>99 % | 102 g/l<br>84,1 % | | 1,2 g/l<br>1 % | |
| 10 (inv.) | Nu-87<br>Pt | 121,2 g/l | 120 g/l<br>99 % | 102 g/l<br>84,1 % | | 1,2 g/l<br>1 % | |
| 11 (inv.) | EU-1<br>Pt | 121,2 g/l | 120 g/l<br>99 % | 102 g/l<br>84,1 % | | 1,2 g/l<br>1 % | |
| 12 (comp.) | ZSM-5<br>Pt | 121,2 g/l | 120 g/l<br>99 % | 102 g/l<br>84,1 % | | 1,2 g/l<br>1 % | |
| 13 (inv.) | Nu-86<br>La - Cu | 131,85 g/l | 120 g/l<br>91 % | 102 g/l<br>77,3% | 3,95 g/l<br>3% | | 7,9 g/l<br>6 % |
| 14 (inv.) | Nu-87<br>La - Cu | 131,85 g/l | 120 g/l<br>91 % | 102 g/l<br>77,3 % | 3,95 g/l<br>3% | | 7,9 g/l<br>6% |
| 15 (inv.) | EU-1<br>La - Cu | 131,85 g/l | 120 g/l<br>91 % | 102 g/l<br>77,3 % | 3,95 g/l<br>3% | | 7,9 g/l<br>6% |
| 16 (comp.) | ZSM-5<br>La - Cu | 131,85 g/l | 120 g/l<br>91 % | 102 g/l<br>77,3% | 3,95 g/l<br>3 % | | 7,9 g/l<br>6% |
| 17 (inv.) | Nu-86<br>La - Pt | 129,1 g/l | 120 g/l<br>92,9 % | 102 g/l<br>79 % | | 1,2 g/l<br>1 % | 7,9 g/l<br>6 % |
| 18 (inv.) | Nu-87<br>La - Pt | 129,1 g/l | 120 g/l<br>92,9% | 102 g/l<br>79% | | 1,2 g/l<br>1 % | 7,9 g/l<br>6% |
| 19 (inv.) | EU-1<br>La - Pt | 129,1 g/l | 120 g/l<br>92,9% | 102 g/l<br>79% | | 1,2 g/l<br>1 % | 7,9 g/l<br>6% |
| 20 (comp.) | ZSM-5<br>La - Pt | 129,1 g/l | 120 g/l<br>92,9 % | 102 g/l<br>79 % | | 1,2 g/l<br>1 % | 7,9 g/l<br>6 % |

**Exemple 21**

Les catalyseurs préparés sur supports céramique sont testés au laboratoire dans une micro-unité avec un mélange de gaz synthétique renfermant les principales familles de composés présents dans un gaz d'échappement de noteur Diesel. Les conditions opératoires sont les suivantes :

| | |
|---|---|
| **vitesse spatiale** (VVH) | 50000 $h^{-1}$ |
| **composition du mélange** | |
| $NO_x$ | 600ppm vol |
| Hydrocarbures | 6000ppmC (équivalent méthane) |
| $O^2$ | 5 % vol |
| $CO^2$ | 10 % vol |
| CO | 500ppm vol |
| $H^2O$ | 10 % vol |
| $SO^2$ | 20ppm vol |
| $N^2$ | complément à 100 % vol |
| **température** | montée de 150 à 500 °C (5 °C/ min.) |

Les catalyseurs préparés selon les exemples 1, 2, 3, et 4, soient les catalyseurs de formulation zéolithe NU-86, zéolithe NU-87, zéolithe EU-1, zéolithe ZSM-5, sont testés avec comme hydrocarbure le propène.

Les catalyseurs préparés selon les exemples 5, 6, 7, 8, 13, 4, 15 et 16, soient les catalyseurs de formulation Cu/zéolithe NU-86, Cu/zéolithe NU-87, Cu/zéolithe EU-1, Cu/zéolithe ZSM-5, Cu-La/zéolithe NU-86, Cu-La/zéolithe NU-87, Cu-La/zéolithe EU-1 et Cu-La/zéolithe ZSM-5 sont testés avec comme hydrocarbure le propène.

Les catalyseurs préparés selon les exemples 9, 10, 11, 12, 17, 18, 19 et 20, soient les catalyseurs de formulation Pt/zéolithe NU-86, Ft/zéolithe NU-87, Pt/zéolithe EU-1, Pt/zéolithe ZSM-5, formulation Pt-La/zéolithe NU-86, Pt-La/zéolithe NU-87, Pt-La/zéolithe EU-1 et Pt-La/zéolithe ZSM-5 sont testés avec comme hydrocarbure le n-décane.

L'analyse des principaux composants est réalisée en continu à la sortie du réacteur par des analyseurs à détection infrarouge pour le monoxyde de carbone (CO) et ie protoxyde d'azote ($N_2O$), par ionisation de flamme pour les hydrocarbures (HC) et par chimiluminescence pour les oxydes d'azote (NO et $NO_2$).

Ces résultats d'analyse permettent de déterminer les évolutions de la conversion des oxydes d'azote, de la sélectivité en protoxyde d'azote et du rendement azote en fonction de l'évolution de la température de réaction.

Les formules de calcul pour ces trois paramètres (exprimés en %) sont les suivantes :

$$\text{Conversion } NO_x : = C = 100 \text{ x } (NO_x \text{ entrée - } NO_x \text{ sortie}) / NO_x \text{ entrée}$$

$$\text{Sélectivité } N_2O : S = 100 \text{ x } (2 \text{ x } N_2O \text{ formé}) / NO_x \text{ disparu}$$

$$\text{Rendement } N_2 : R = C \text{ x } (100\text{-}S) / 100$$

Avant la réalisation des tests catalytiques, les catalyseurs préparés sur supports céramiques subissent un traitement thermique selon les conditions suivantes. Le catalyseur est placé 8 heures à 600 °C sous un flux constitué de 18 % d'oxygène, de 10 % d'eau et du complément en azote. Les catalyseurs ayant subi ce traitement thermique sont testés dans une micro-unité avec un mélange de gaz synthétique renfermant les principales familles de composés présents dans un gaz d'échappement d'un moteur Diesel, selon les conditions opératoires décrites ci-dessus.

Dans le tableau II ci-dessous sont rassemblés les valeurs des températures et des trois paramètres, "Conversion $NO_x$", " Sélectivité $N_2O$", " Rendement $N_2$" , calculés pour les conditions de tests correspondant aux plus faibles émissions en $NO_x$ à la sortie du catalyseur (conversion les plus fortes).

Tableau II

| Tests catalytiques en micro - unité | | | | | |
|---|---|---|---|---|---|
| Catalyseur de l'exemple | Composition | Conversion $NO_x$ max ( %) | Sélectivité $N_2O$ ( %) | Rendement $N_2$ ( %) | Température Conversion max ( °C) |
| 1 (inv.) | NU-86 | 40 | 1 | 39 | 480 |
| 2 (inv.) | NU-87 | 35 | 1 | 34 | 490 |
| 3 (inv.) | EU-1 | 32 | 2 | 31 | 495 |
| 4 (comp.) | ZSM-5 | 30 | 4 | 29 | 500 |
| 5 (inv.) | Nu-86 Cu | 55 | 7 | 51 | 295 |
| 6 (inv.) | Nu-87 Cu | 48 | 5 | 45 | 305 |
| 7 (inv.) | EU-1 Cu | 45 | 3 | 43 | 310 |
| 8 (comp.) | ZSM-5 Cu | 40 | 10 | 36 | 330 |
| 9 (inv.) | Nu-86 Pt | 70 | 50 | 35 | 200 |
| 10 (inv.) | Nu-87 Pt | 65 | 35 | 42 | 205 |
| 11 (inv.) | EU-1 Pt | 60 | 30 | 42 | 215 |
| 12 (comp.) | ZSM-5 Pt | 55 | 75 | 14 | 240 |
| 13 (inv.) | Nu-86 La - Cu | 70 | 5 | 66 | 290 |
| 14 (inv.) | Nu-87 La - Cu | 65 | 3 | 63 | 300 |
| 15 (inv.) | EU-1 La - Cu | 63 | 2 | 61 | 305 |
| 16 (comp.) | ZSM-5 La - Cu | 55 | 10 | 49 | 320 |
| 17 (inv.) | Nu-86 Pt - La | 55 | 60 | 22 | 230 |
| 18 (inv.) | Nu-87 Pt - La | 50 | 45 | 27 | 235 |
| 19 (inv.) | EU-1 Pt - La | 48 | 40 | 29 | 245 |
| 20 (comp.) | ZSM-5 Pt - La | 45 | 80 | 9 | 270 |

On constate que les conversions maximales, les rendements en azote et les températures les plus basses pour atteindre ces maxima sont toujours en faveur des catalyseurs utilisés selon l'invention.

Par conséquent, les catalyseurs utilisés selon l'invention sont donc plus performants pour la réaction de réduction de tous les composés oxygénés de l'azote en azote moléculaire les sélectivités en $N_2O$ sont les plus faibles et les rendements en azote sont les plus élevés.

## Revendications

1. Procédé de réduction des oxydes d'azote NO et $NO_2$ en azote moléculaire $N_2$ dans un milieu surstoechiométrique en oxydants, par des agents réducteurs, en présence d'un catalyseur contenant au moins un oxyde inorganique réfractaire constitué au moins en partie d'au moins une des zéolithes du groupe formé par les zéolithes NU-86, NU-87 et EU-1.

2. Procédé selon la revendication 1 dans lequel le catalyseur contient en outre au moins un élément (A) appartenant aux groupes VIB, VIIB, VIII et IB des métaux de transition.

3. Procédé selon la revendication 1 ou 2 dans lequel le catalyseur contient en outre au moins un élément (B) du groupe VIII des métaux nobles.

4. Procédé selon l'une des revendications 1 à 3 dans lequel le catalyseur contient en outre au moins un élément (C) appartenant au groupe IIA des alcalino-terreux et/ou au groupe IIIB des terres rares.

5. Procédé selon l'une des revendications 1 à 4, **caractérisé en ce que** la composition du catalyseur, exprimée en pourcentage massique par rapport au produit calciné à 550°C pendant 4h, est la suivante :

   - de 55 % à 100 % d'au moins un oxyde inorganique réfractaire constitué au moins en partie d'au moins une des zéolithes du groupe formé par NU-86, NU-87, EU-1,
   - de 0 à 20 % d'au moins un élément (A) appartenant aux groupes VIB, VIIB, VIII et IB des métaux de transition, exprimé sous forme d'oxyde,
   - de 0 à 5 % d'au moins un élément (B) appartenant au groupe VIII des métaux nobles, et
   - de 0 à 20 % d'au moins un élément (C) appartenant au groupe IIA des alcalino-terreux, au groupe IIIB des terres rares, exprimé sous forme d'oxyde.

6. Procédé selon l'une des revendications 1 à 5, dans lequel la masse de zéolithe NU-86 ou NU-87 ou EU-1 par rapport à la masse de l'ensemble des oxydes inorganiques réfractaires constituant la phase active du catalyseur est comprise entre 50 et 100 % et de préférence entre 80 et 100 %.

7. Procédé selon l'une des revendications 1 à 6, dans lequel l'oxyde inorganique réfractaire compris dans le catalyseur est choisi dans le groupe constitué par la zéolithe NU-86, NU-87 ou EU-1, l'alumine, la silice, la silice-alumine, l'oxyde de titane, l'oxyde de zirconium, un oxyde mixte ou une solution solide d'au moins deux des oxydes précités, ou le mélange d'au moins deux de ces composés.

8. Procédé selon l'une des revendications 2 à 7, dans lequel l'élément (A) compris dans le catalyseur est choisi parmi le cuivre, le nickel, le cobalt, le fer, le manganèse, le chrome, le molybdène ou le mélange d'au moins deux de ces éléments.

9. Procédé selon l'une des revendications 3 à 8, dans lequel l'élément (B) est choisi parmi le platine, le rhodium, le ruthénium, l'iridium, le palladium ou le mélange d'au moins deux de ces éléments.

10. Procédé selon l'une des revendications 4 à 9, dans lequel l'élément (C) est choisi parmi le calcium, le baryum, le strontium, le lanthane, le cérium ou le mélange d'au moins deux de ces éléments.

11. Procédé selon l'une des revendications 1 à 10, dans lequel le catalyseur se présente sous forme de billes, d'extrudés ou de pastilles.

12. Procédé selon l'une des revendications 1 à 11, dans lequel le catalyseur est supporté sur un substrat monolithique.

13. Procédé selon l'une des revendications 1 à 12, dans lequel on élimine des oxydes d'azote émis par les moteurs stationnaires, les véhicules à moteur Diesel, les véhicules à essence à mélange pauvre et par les turbines fonctionnant au gaz naturel GNC ou liquéfiés GPL ou encore avec un carburant liquide.

14. Procédé selon l'une des revendications 1 à 13, **caractérisé en ce que** les composés réducteurs mis en oeuvre pour réaliser la réduction des oxydes d'azote sont choisi parmi le monoxyde de carbone, l'hydrogène, les hydrocarbures, les alcools, les éthers ou d'autres produits organiques oxygénés, et également les carburants consommés par un moteur ou une turbine.

15. Procédé selon l'une des revendications 1 à 14 tel que la réduction des oxydes d'azote en azote moléculaire en milieu surstoechiométrique en oxydants par des agents réducteurs est effectué à une température comprise entre 150°C et 600°C.

**Patentansprüche**

1. Verfahren zur Reduktion von Stickoxiden NO und $NO_2$ zu molekularem Stickstoff $N_2$ in einem an Oxidationsmitteln überstöchiometrischen Gemisch, durch Reduktionsmittel in Gegenwart eines Katalysators, der wenigstens ein feuerfestes anorganisches Oxid enthält, das wenigstens zum Teil aus wenigstens einem Zeolith der durch die Zeolithe NU-86, NU-87 und EU-1 gebildeten Gruppe besteht.

2. Verfahren nach Anspruch 1, bei dem der Katalysator außerdem wenigstens ein Element (A) enthält, das zu den Gruppen VIB, VIIB, VIII und IB der Übergangsmetalle gehört.

3. Verfahren nach Anspruch 1 oder 2, bei dem der Katalysator außerdem wenigstens ein Element (B) der Gruppe VIII der Edelmetalle enthält.

4. Verfahren nach einem der Ansprüche 1 bis 3, bei dem der Katalysator außerdem wenigstens ein Element (C) enthält, das zur Gruppe IIA der Erdalkalimetalle und/oder zur Gruppe IIIB der Seltenerden gehört.

5. Verfahren nach einem der Ansprüche 1 bis 4, **dadurch gekennzeichnet, dass** die Zusammensetzung des Katalysators, ausgedrückt in Masseprozent im Verhältnis zum bei 550°C für 4 h kalzinierten Produkt die folgende ist:

   a. 55% bis 100% wenigstens eines feuerfesten anorganischen Oxids, das wenigstens zum Teil aus wenigstens einem Zeolith der durch NU-86, NU-87, EU-1 gebildeten Gruppe besteht,

   b. 0% bis 20% wenigstens eines Elements (A), das zu den Gruppen VIB, VIIB, VIII und IB der Übergangsmetalle gehört, ausgedrückt in Oxidform,

   c. 0% bis 5% wenigstens eines Elements (B), das zur Gruppe VIII der Edelmetalle gehört, und

   d. 0% bis 20% wenigstens eines Elements (C), das zur Gruppe IIA der Erdalkalimetalle, zur Gruppe IIIB der Seltenerden gehört , ausgedrückt in Oxidform.

6. Verfahren nach einem der Ansprüche 1 bis 5, bei dem die Masse an NU-86-oder NU-87- oder EU-1-Zeolith im Verhältnis zur Gesamtheit der Masse der feuerfesten anorganischen Oxide, die die aktive Phase des Katalysators bilden, zwischen 50 und 100% und vorzugsweise zwischen 80 und 100% liegt.

7. Verfahren nach einem der Ansprüche 1 bis 6, bei dem das feuerfeste anorganische Oxid, das in dem Katalysator enthalten ist, aus der Gruppe gewählt ist, die gebildet wird durch den Zeolith NU-86, NU-87 oder EU-1, Aluminiumoxid, Siliziumoxid, Silizium-Aluminiumoxid, Titanoxid, Zirkoniumoxid, ein gemischtes Oxid oder eine feste Lösung von wenigstens zwei der vorgenannten Oxide oder das Gemisch von wenigstens zwei dieser Verbindungen.

8. Verfahren nach einem der Ansprüche 2 bis 7, bei dem das Element (A), das in dem Katalysator enthalten ist, gewählt ist unter Kupfer, Nickel, Kobalt, Eisen, Mangan, Chrom, Molybdän oder dem Gemisch von wenigstens zwei dieser Elemente.

9. Verfahren nach einem der Ansprüche 3 bis 8, bei dem das Element (B) gewählt ist unter Platin, Rhodium, Ruthenium, Iridium, Palladium oder dem Gemisch von wenigstens zwei dieser Elemente.

10. Verfahren nach einem der Ansprüche 4 bis 9, bei dem das Element (C) gewählt ist unter Calcium, Barium, Strontium, Lanthan, Cer oder dem Gemisch von wenigstens zwei dieser Elemente.

11. Verfahren nach einem der Ansprüche 1 bis 10, bei dem der Katalysator in Form von Kugeln, Extrudaten oder Pastillen vorliegt.

12. Verfahren nach einem der Ansprüche 1 bis 11, bei dem der Katalysator auf einem monolithischen Substrat getragen ist.

13. Verfahren nach einem der Ansprüche 1 bis 12, bei dem man durch die stationären Motoren, die Fahrzeuge mit Dieselmotor, die Benzinfahrzeuge mit Magergemisch und durch die Turbinen, die mit Erdgas (GNC) oder Flüssiggasen (GPL) oder auch mit einem Flüssigen Treibstoff arbeiten, ausgestoßene Stickoxide entfernt.

14. Verfahren nach einem der Ansprüche 1 bis 13, **dadurch gekennzeichnet, dass** die reduzierenden Verbindungen, die eingesetzt werden, um die Reduktion der Stickoxide durchzuführen, gewählt sind unter Kohlenmonoxid, Wasserstoff, Kohlenwasserstoffen, Alkoholen, Ethern oder anderen sauerstoffhaltigen organischen Produkten und ebenso Treibstoffen, die von einem Motor oder einer Turbine verbraucht werden.

15. Verfahren nach einem der Ansprüche 1 bis 14 derart, dass die Reduktion der Stickoxide zu molekularem Stickstoff in einem an Oxidationsmitteln überstöchiometrischen Gemisch, durch Reduktionsmittel bei einer Temperatur zwischen 150°C und 600°C durchgeführt wird.

## Claims

1. A process for reducing oxides of nitrogen NO and $NO_2$ to molecular nitrogen in a medium which his superstoichiometric in oxidising agent using reducing agents in the presence of a catalyst containing at least one refractory inorganic oxide at least in part constituted by at least one zeolite from the group formed by NU-86, NU-87 and EU-1 zeolites.

2. A process according to claim 1, in which the catalyst further contains at least one element (A) selected from the group consisting of elements from groups VIB, VIIB, VIII and IB, the transition metals.

3. A process according to claim 1 or claim 2, in which the catalyst further contains at least one element (B) selected from the group consisting of elements from group VIII of the noble metals.

4. A process according to any one of claims 1 to 3, in which the catalyst further contains at least one element (C) selected from the group consisting of elements from group IIA of the alkaline-earths and/or group IIIB of the rare earths.

5. A process according to any one of claims 1 to 4, **characterized in that** the composition by weight of the catalyst, expressed in weight percent with respect to the product calcined at 550°C for 4 hours, is as follows:

- 55% to 100% of at least one refractory inorganic oxide at least in part constituted by at least one zeolite from the group formed by NU-86, NU-87 and EU-1 zeolites;
- 0 to 20% of at least one element (A) selected from the group consisting of elements from groups VIB, VIIB, VIII and IB, the transition metals, expressed as the oxide;
- 0 to 5% of at least one element (B) selected from the group consisting of elements from group VIII of the noble metals; and
- 0 to 20% of at least one element (C) selected from the group consisting of elements from group IIA of the alkaline-earths, and/or group IIIB of rare earths, expressed as the oxide.

6. A process according to any one of claims 1 to 5, in which the weight of NU-86 or NU-87 or EU-1 zeolite with respect to the weight of the ensemble of refractory inorganic oxides constituting the active phase of the catalyst is in the range 50% to 100%, preferably in the range 80% to 100%.

7. A process according to any one of claims 1 to 6, in which the refractory inorganic oxide in the catalyst is selected from the group consisting of NU-86, NU-87 and EU-1 zeolite, alumina, silica, silica-alumina, titanium oxide, zirconium oxide, a mixed oxide or a solid solution of at least two of the above oxides, or a mixture of at least two of these compounds.

8. A process according to claims 2 to 7, in which element (A) in the catalyst is selected from the group consisting of copper, nickel, cobalt, iron, manganese, chromium, molybdenum or a mixture of at least two of these elements.

**9.** A process according to claims 3 to 8, in which element (B) is selected from the group consisting of platinum, rhodium, ruthenium, iridium, palladium or a mixture of at least two of these elements.

**10.** A process according to claims 4 to 9, in which element (C) is selected from the group consisting of calcium, barium, strontium, lanthanum, cerium or a mixture of at least two of these elements.

**11.** A process according to claims 1 to 10, in which the catalyst is in the form of beads, extrudates or pellets.

**12.** A process according to claims 1 to 11, in which the catalyst is supported on a monolithic substrate.

**13.** A process according to any one of claims 1 to 12, in which the oxides of nitrogen emitted by stationary engines, diesel vehicle engines, lean burn petrol vehicle engines and by turbines running on natural gas (CNG) or liquid petroleum gas (LPG) or with a liquid fuel are eliminated.

**14.** A process according to any one of claims 1 to 13, **characterized in that** the reducing compounds used to reduce the oxides of nitrogen are selected from the group consisting of carbon monoxide, hydrogen, hydrocarbons, alcohols, ethers or other organic oxygen-containing products, and also from fuels consumed by the engine or the turbine.

**15.** A process according to any one of claims 1 to 14, in which reduction of the oxides of nitrogen to molecular nitrogen in a medium which is superstoichiometric in oxidising agents by reducing agents is carried out at a temperature in the range 150°C to 600°C.